Europäisches Patentamt

European Patent Office

Office européen des brevets

(19)

(11) Publication number: **0 053 996**
**A1**

(12) **EUROPEAN PATENT APPLICATION**

(21) Application number: **81630079.2**

(22) Date of filing: **19.11.81**

(51) Int. Cl.³: **B 60 C 27/20**
**B 62 D 55/24**

(30) Priority: **08.12.80 US 213967**

(43) Date of publication of application:
**16.06.82 Bulletin 82/24**

(84) Designated Contracting States:
**DE FR GB IT LU**

(71) Applicant: **THE GOODYEAR TIRE & RUBBER COMPANY**
**1144 East Market Street**
**Akron, Ohio 44316(US)**

(72) Inventor: **Schueller, Helmut**
**2306 Lancaster Road**
**Akron Ohio 44313(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) Track belt assembly.

(57) The assembly (10), wherein the radially inner peripheral surface (21) of the reinforcing belt (11) is substantially smooth, comprises a plurality of shoes (13) spaced about said outer peripheral surface of said belt structure; a plurality of anchor plates (15) disposed adjacent the radially inner peripheral surface (21) of said belt structure, at least one of said anchor plates (15) being associated with each of said shoes (13); means (19) for securing said shoes (13) to each of said associated anchor plates (15); an elastomeric spacer (23) disposed radially inward with respect to the axis of rotation of said assembly (10) and adjacent the radially inner surface of each of said anchor plates (15), said spacers having a recessed portion (25) for receiving said anchor plate (15).

FIG. 4

FIG. 5

EP 0 053 996 A1

## TRACK BELT ASSEMBLY

The foregoing abstract is not to be taken as limiting the invention of this application, and in order to understand the full nature and extent of the technical disclosure of this application, reference must be made to the accompanying drawings and the following detailed description.

### Background of the Invention

This invention relates to an improved track belt assembly and method for making same.

Track belt assemblies of the prior art generally comprise of a plurality of shoes placed circumferentially about the outer periphery of a reinforcing belt structure. Disposed adjacent the inner peripheral surface of the belt structure, is a plurality of anchor plates each being secured to its respective shoe. The track assembly is generally mounted on a pneumatic load supporting structure. The peripheral inner surface of the belt reinforcing structure is provided with a plurality of radially extending ribs disposed between adjacent anchor plates. Each of the ribs are provided with a plurality of circumferentially extending ribs for mating with grooves in the pneumatic load supporting structure. In order to achieve the desired configuration of the inner peripheral surface of the reinforcing belt structure, the reinforcing belt structure is built on a building mandrel having an outer peripheral surface having the shape which corresponds to the radial circumferential ribs of the reinforcing belt structure. To achieve this particular configuration, the building mandrel generally comprises numerous individual components which requires a substantial amount of capital expenditure. Additionally, because of the complex outer peripheral configuration of the building mandrel, the labor involved in building the reinforcing belt structure is substantial.

Applicants have invented a novel track belt assembly and an improved method for making same which has the required performance characteristics desired while requiring substantially less capital expenditure and costs to manufacture.

## Description of the Drawings

Figure 1 is a fragmentary side elevation view of the track belt assembly of the prior art showing three adjacent track shoes;

Figure 2 is a side elevation view of the reinforcing belt structure illustrated in figure 1;

Figure 3 is a fragmentary view of the inner peripheral surface of the reinforcing belt structure of figure 2;

Figure 4 is a fragmentary side elevation view of the track belt assembly of the present invention showing three adjacent track shoes;

Figure 5 is a side elevation view of the reinforcing belt structure illustrated in figure 4;

Figure 6 is a transverse cross-sectional view of the track belt assembly of the present invention mounted on a pneumatic tire;

Figure 7 is a fragmentary view of the inner peripheral surface of the belt reinforcing structure of figure 5;

Figure 8 is a perspective view of an anchor plate and rubber elastomeric spacer of the track belt assembly illustrated in figure 4;

Figure 9 is a fragmentary side elevation view of a modified track belt assembly made in accordance with the present invention illustrating three adjacent track shoes; and

Figure 10 is a perspective view of a single anchor plate and elastomeric spacer illustrated in figure 9 of the present invention.

### Detailed Description of the Invention

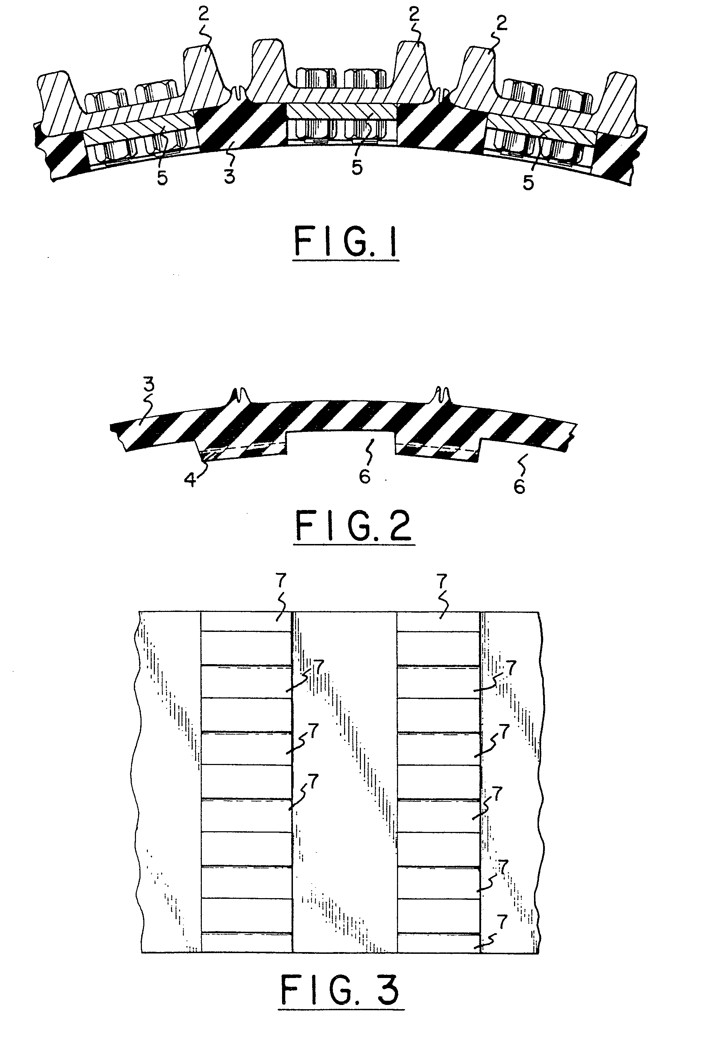

Referring to figures 1, 2 and 3, there is illustrated a track belt assembly made in accordance with the prior art. The track belt assembly of the prior art comprises a plurality of ground-engaging shoes 2 placed circumferentially about reinforcing belt structure 3. The belt reinforcing structure 3 is provided with a plurality of radially extending projections 4 which separate adjacent anchor plates 5. Recesses 6 are provided in the belt structure 3 for receiving anchor plates 5. Circumferentially extending ribs 7 are provided in projections 4 for mating with corresponding grooves formed in the supporting structure. As is apparent from the drawings, the inner peripheral surface of the reinforcing belt structure of the prior art is quite complex in configuration. The complex configuration of the belt reinforcing structure generally requires that the belt structure be built on a building mandrel having a plurality of recesses for forming projections 4 and ribs 7. The outer peripheral surface of building mandrel is provided with many individual components, many of which are required to be machined which require a substantial amount of capital expenditure. The reinforcing belt structure of the prior art is built by filling the recesses or voids in the building mandrel with strips of elastomeric material. A layer of elastomeric material is then generally provided about the circumference of the mandrel. Thereafter, a reinforcing cord structure is positioned about the mandrel. This generally takes the form of a plurality of reinforcing cords helically wound about the building drum.

Thereafter, a second layer of elastomeric material is wrapped about the tire building mandrel to the desired thickness. The building mandrel is then placed in the mold where the belt reinforcing structure is cured to its final configuration. It can be seen that because of the complex configuration of the inner peripheral surface of the belt reinforcing structure, a substantial amount of expense is required to produce the building mandrel and construct the reinforcing belt structure.

The present invention is directed to a removable track belt assembly which is preferably supported by an inflatable supporting structure. For example, a pneumatic tire.

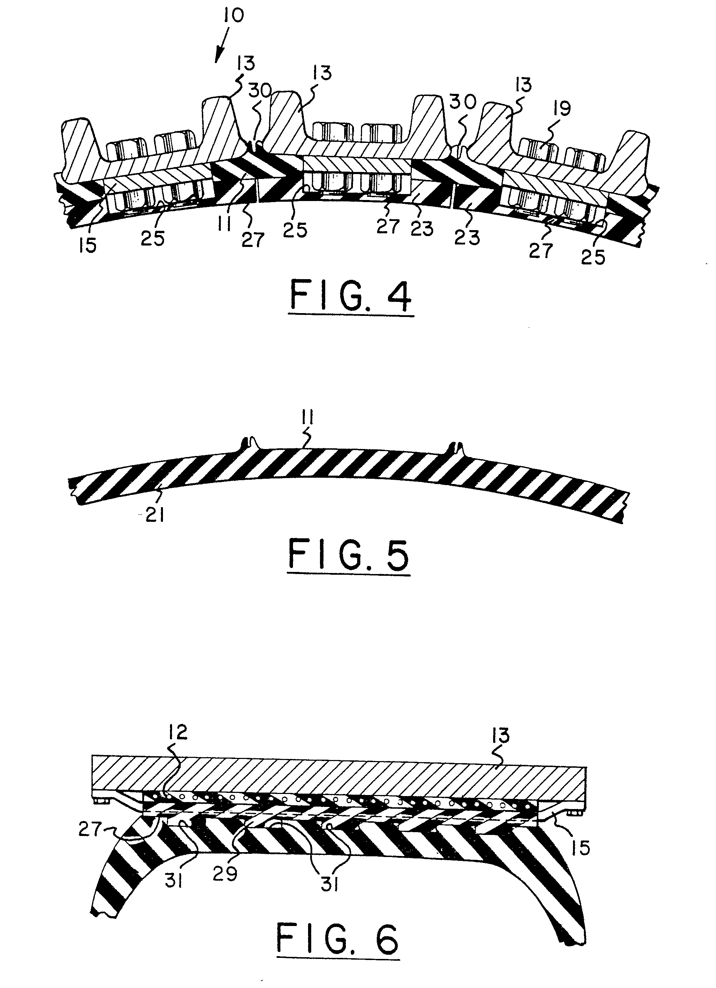

Referring to figures 4, 5, 6, 7 and 8, the track belt assembly 10 of the present invention is provided with a reinforcing belt structure 11 having an inner peripheral surface 21 which is substantially smooth. The belt reinforcing structure 11 is built on a drum which does not require numerous components in order to form recesses or ribs on the inner peripheral surface 21 of reinforcing belt structure 11 as is required in the prior art. Additionally, the time required to build the belt reinforcing structure 11 is substantially less than the prior art. The belt reinforcing structure 11 of the present invention is built on a building drum having a substantially smooth outer peripheral surface (not shown). The belt structure is made by placing a first layer of elastomeric material about the outer peripheral surface of the building drum and then providing a cord reinforcing structure about the first layer of elastomeric material. In the particular embodiment illustrated, the cord reinforcing structure 12 comprises one layer of cords helically wound about the building drum. However, the present invention is not limited to such. The reinforcing structure 12 may comprise any desired number of layers and the cords may be disposed in any desired angle with respect to the midcircumferential centerplane of the track belt assembly 10. After the cord reinforcing structure 12 is applied, a second layer of elastomeric material is placed about the reinforcement. The assembly is then placed in a mold where it is cured to its final configuration.

The track belt assembly of the present invention comprises a plurality of shoes placed about the outer peripheral surface 14 of the reinforcing belt structure 11. The shoes 13 may be of any design or configuration desired. In the particular embodiment illustrated, the shoes comprise a single member having a substantially U shaped cross-section. Associated with each shoe 13 is an anchor plate 15 disposed adjacent the inner peripheral surface 21 of reinforcing belt structure 11. The shoes are secured to its associated anchor plate 15 by fastening means 19. In the particular embodiment illustrated, fastening means 19 comprises a pair of nut bolt assemblies located at the lateral end of shoe 13 and anchor plate 15. Fastening means 19 may be located along any portion of the shoe as desired. While nut bolt assemblies have been shown in the preferred embodiment, the shoes 13 may be secured to anchor plates 15 by any desired means. Disposed adjacent the inner peripheral surface 21 of reinforcing belt structure 11 is a plurality of elastomeric spacers 23 each having a recess 25 for receiving its associated anchor plate 15. While the particular embodiment illustrated has a plurality of separate spacers 23, the spacers 23 may be molded as a single unitary body if desired. The radially inner surface 27 of elastomeric spacers 23 is provided with circumferentially extending ribs 29 for mating with grooves 31 in the load supporting structure or pneumatic tire upon which the belt assembly is mounted. In the particular embodiment illustrated, five ribs 29 are shown, however, any desired number of ribs may be used. The mating of ribs 29 and grooves 31 of load supporting structure allows for precise axial alignment of the track belt assembly with the load supporting structure and prevents the track belt assembly from simply walking off the load supporting structure.

On the outer peripheral surface 21 of reinforcing belt structure 11 between circumferentially adjacent shoes 13, there is provided seals 30 which serve generally to align shoes in their appropriate position and minimize dirt build-up beneath the shoes 13. Seals 30 may take any form desired and may be entirely omitted if desired.

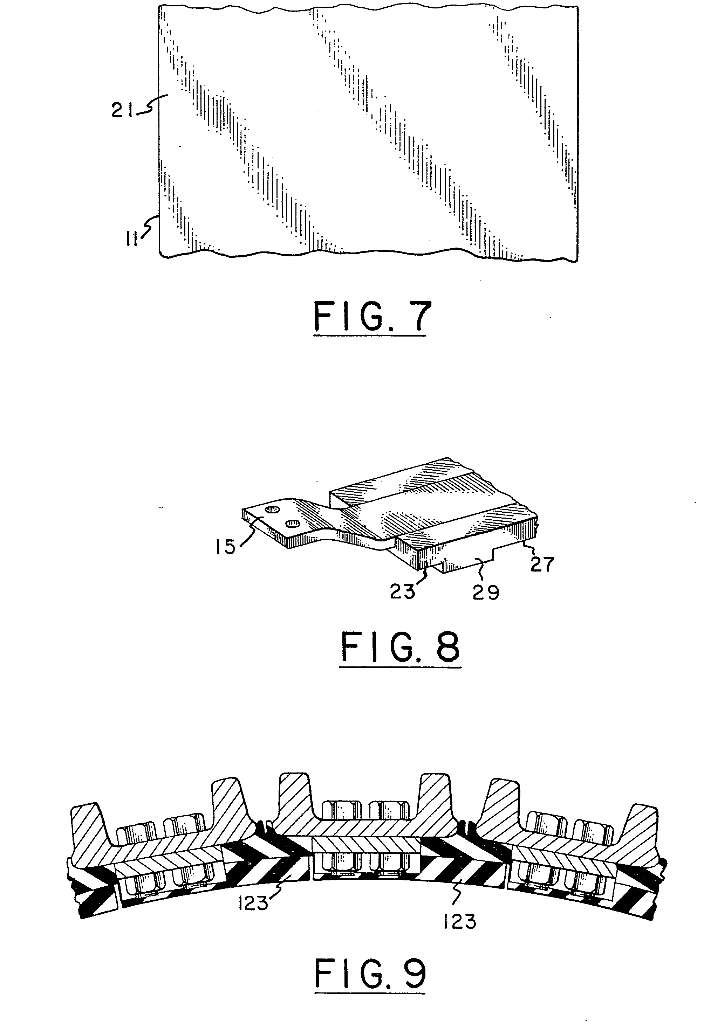

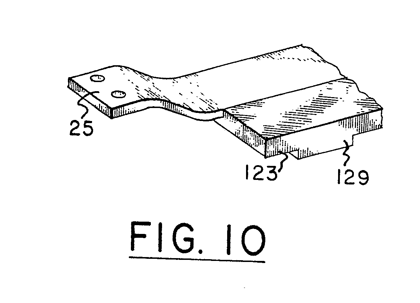

Referring to figures 9 and 10, there is illustrated a modified form of the present invention wherein a modified elastomeric spacer 123 is used. Instead of extending on either circumferential side of anchor plate 15, the elastomeric spacers 123 start adjacent one edge of anchor plate 15 and extends completely across the anchor plate terminating past the other edge of anchor plate 15 closely adjacent the next circumferentially adjacent anchor plate 15. The elastomeric spacer 123 may take many other forms not illustrated and may even be continuous if so desired.

While certain representative embodiments and details have been shown for the purposes of illustrating the invention, it will be apparent to those skilled in the art that various changes and modifications may be made therein without departing from the spirit or scope of the invention.

WE CLAIM:

1. An endless track belt assembly comprising:

an endless reinforcing belt structure having a radially outer peripheral surface and a substantially smooth radially inner peripheral surface;

a plurality of shoes spaced about said outer peripheral surface of said belt structure;

a plurality of anchor plates disposed adjacent the radially inner peripheral surface of said belt structure, at least one of said anchor plates being associated with each of said shoes;

means for securing said anchor shoes to each of said associated anchor plates;

an elastomeric spacer disposed radially inward with respect to the axis of rotation of said assembly and adjacent the radially inner surface of each of said anchor plates, said spacers having a recessed portion for receiving said anchor plate.

2. In combination, a removable track belt assembly, an inflatable load supporting structure, said removable track belt assembly being disposed about the outer periphery of said load supporting structure, said removable track belt assembly comprising:

a reinforcing belt structure extending about the circumference thereof, said reinforcing belt structure having a substantially smooth radially inner peripheral surface;

a plurality of shoes spaced about the outer peripheral surface of said reinforcing belt structure;

means for securing said anchor shoes to each of said associated anchor plates;

an elastomeric spacer disposed radially inward with respect to the axis of rotation of said assembly and adjacent the radially inner surface of each of said anchor plates, said spacers having a recessed portion for receiving said anchor plate.

3. The invention according to claims 1 or 2 further characterized in that said reinforcing belt structure comprises a plurality of substantially parallel cords, said cords of said reinforcing structure being oriented at an angle of about 0° with respect to the midcircumferential centerplane of said track belt assembly.

4. The invention according to claims 1 or 2 further characterized by said spacers having said recessed portions for receiving said anchor plates substantially in the middle of said spacer.

5. The invention according to claims 1 or 2 further characterized in that said recesses in said elastomeric spacers are disposed on one side of said spacer.

6. The invention according to claims 1 or 2 further characterized by said spacers being formed integrally as a single unitary structure.

7. The invention according to claims 1 or 2 further characterized by the radially outer peripheral surface of said reinforcing belt structure having a plurality of seals, each of said seals being disposed between circumferentially adjacent shoes.

8. The invention according to claim 2 further characterized in that said inflatable supporting structure comprises a pneumatic tire.

9. The method of making a reinforcing belt structure having a substantially smooth inner peripheral surface for track belt assemblies comprising the steps of:

  providing a first layer of elastomeric material about a cylindrical building drum;

  providing a cord reinforcing structure about said first elastomeric layer;

  providing a second layer of an elastomeric material about the outer periphery of said cord reinforcement;

  curing said assembly such that the radially inner surface is substantially smooth.

81630079.2

0053996

1 / 4

FIG. 1

FIG. 2

FIG. 3

0053996

FIG. 4

FIG. 5

FIG. 6

0053996

FIG. 7

FIG. 8

FIG. 9

0053996

FIG. 10

# EUROPEAN SEARCH REPORT

| Category | Citation of document with indication, where appropriate, of relevant passages | Relevant to claim |
|---|---|---|
| X A | US − A − 4 132 258 (A. VIDAKOVIC et al.) <br> * column 7, lines 41 to 64; fig. 5 * <br> * column 4, line 32 to column 6, line 4; fig. 4 * | 1,2 |
| Y | US − A − 4 056 288 (R.N. STEDMAN) <br> * column 2, line 27 to column 3, line 7; fig. 2, 3 * | 1,2,6 |
| Y X | US − A − 3 899 220 (C.E. GRAWEY et al.) <br> * claims 1, 2; column 2, line 31 to column 3, line 9; column 4, lines 35 to 40; fig. 1 to 5 * <br> * column 3, lines 10 to 60 * | 1-3, 7,8 <br><br> 9 |
| A | US − A − 4 081 013 (E.T. HERMAN) <br> * claim 10; column 2, lines 43 to 62; fig. 1, 2 * | |

**DOCUMENTS CONSIDERED TO BE RELEVANT**

**CLASSIFICATION OF THE APPLICATION (Int. Cl. 3)**

B 60 C 27/20
B 62 D 55/24

**TECHNICAL FIELDS SEARCHED (Int.Cl. 3)**

B 60 C 27/20
B 62 D 55/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 18-02-1982 | PETTI |